# FASCICULE DE BREVET EUROPEEN

(11) **EP 0 573 349 B1**
(45) Date de publication et mention de la délivrance du brevet: **06.08.1997**
(21) Numéro de dépôt: 93401399.6
(22) Date de dépôt: 02.06.1993
(51) Int. Cl.: H01M 4/38, C22C 19/03

(54) **Matériau hydrurable pour électrode négative d'accumulateur nickel-hydrure et son procédé de préparation**
Wasserstoffaufnehmender Werkstoff für negative Elektroden von Nickel-Hydrid Batterien und Verfahren zur Herstellung
Hydridable material for a nickel-hydride battery negative electrode and process for production

(30) Priorité: 03.06.1992 FR 9206732
(43) Date de publication de la demande: 08.12.1993
(73) Titulaire: SAFT, F-93230 Romainville (FR)
(72) Inventeur: Bouet, Jacques, F-75015 Paris (FR); Knosp, Bernard, F-92200 Neuilly-sur-Seine (FR); Percheron-Guegan, Annick, F-92195 Meudon Principal Cedex (FR); Jordy, Christian, F-92195 Meudon Principal Cedex (FR)
(74) Mandataire: Dalsace, Michel

(56) Documents cités:
- EP-A- 0 273 625
- EP-A- 0 484 964
- FR-A- 2 623 271
- US-A- 3 824 131
- US-A- 4 551 400
- JOURNAL OF THE LESS-COMMON METALS vol. 131, 15 Mars 1987, LAUSANNE CH pages 311 - 319 S. WAKAO ET AL 'CAPACITIES AND DURABILITIES OF TI-ZR-NI ALLOY HYDRIDE ELECTRODES AND EFFECTS OF ELECTROLESS PLATING ON THEIR PERFORMANCE'
- JOURNAL OF THE LESS-COMMON METALS vol. 104, 1984, LAUSANNE CH pages 365 - 373 S. WAKAO ET AL 'ELECTROCHEMICAL CAPACITIES AND CORROSION OF TINIX AND ITS ZIRCONIUM-SUBSTITUTED ALLOY HYDRIDE ELECTRODES'
- JOURNAL OF THE LESS-COMMON METALS vol. 172, 10 Septembre 1991, LAUSANNE CH pages 1236 - 1245 C. JORDY ET AL 'A NEW PRESSURE-COMPOSITION-TEMPERATURE CURVE APPLICATION: POTENTIAL OF THE MH ELECTRODE'

## Description

Cette invention concerne un matériau hydrurable pour électrode négative d'accumulateur nickel-hydrure, et son procédé de préparation

Pour certains secteurs d'application, les accumulateurs nickel-cadmium sont en voie d'être remplacés par des accumulateurs nickel-hydrure. Les accumulateurs nickel-hydrure étanches sont des accumulateurs alcalins à électrolyte aqueux; le réactif constitué par l'hydrogène est stocké dans la masse de l'alliage hydrurable qui a la faculté de pouvoir en absorber de grandes quantités. Cet alliage doit pouvoir emmagasiner et restituer l'hydrogène, selon que l'accumulateur est en charge ou en décharge, avec une vitesse suffisante dans les conditions normales de fonctionnement. Il doit également avoir une capacité électrochimique plus élevée que le cadmium, résister à la corrosion dans la potasse, et ne pas être toxique.

A l'heure actuelle, on utilise principalement des alliages hydrurables de type AB₅, dérivant de LaNi₅, à cause de leur bonne stabilité chimique. Déjà industrialisés, ces matériaux ont une capacité massique pratique de l'ordre de 300mAh/g (et théorique de 350mAh/g), permettant d'atteindre en élément spiralé étanche une énergie massique de 55Wh/Kg, et une énergie volumique de 175Wh/L. Actuellement, ils ont atteint un stade de maturité rendant diffile un accroissement supplémentaire de leurs performances électrochimiques.

Il existe d'autres classes de matériaux hydrurables comme les alliages de type AB₂.

Le brevet US-4 551 400 décrit comme dérivant du système TiV, des alliages de type AB₂, de préférence multiphasés et riches en vanadium, répondant aux formules:
Ti₂₋ₓ Zrₓ V_{4-y} Ni_{y} et (Ti V₂₋ₓ Niₓ)_{1-y} M_{y} où M=Al, ou Zr
avec 0 < x ≦ 1,5 avec 0,2 ≦ x ≦ 1
et 0,6 ≦ y ≦ 3,5 et 0 ≦ y ≦ 0,2

Dans la demande de brevet EP-A-0 293 660 sont divulgués des alliages de type ABₐ, avec a compris entre 1 et 2,5 et comportant au moins une phase du type "phase de Laves" dont la structure cristalline est hexagonale de type C14 (MgZn₂), ou cubique de type C15 (MgCu₂) avec un paramètre de maille compris entre 6,92 et 7,7 Å.

Par ailleurs, le brevet FR-2 623 271 décrit plusieurs groupe d'alliages du type A₃Bₓ où x est compris entre 0 et 0,2. Ici A comprend Ti et Ni, ainsi que Zr, V, Cr, et/ou Mn, et B représente un élément choisi parmi Al, Si, Cr, Mn, Fe, Co, et d'autres. On sait que ces composés sont principalement multiphasés.

L'industrialisation de ces matériaux multiphasés présente des difficultés liées aux problèmes d'oxydabilité aigüe à l'air, de corrosion dans l'électrolyte, et de passivation lors de leur utilisation en électrode.

De nombreux travaux ont également été effectués sur des composés intermétalliques de type AB, dérivant des système TiFe, TiCr, TiCo, et TiNi.

La demande de brevet JP-A-87 184 765 fait référence a des alliages de type ABₐ, avec a compris entre 0,85 et 1,15 et dérivés de TiFe, où le métal M est substitué sur le fer, de formule générique:

Ti₁₋ₓ Znₓ Fe_{a-y-z} Ni_{y} M_{z}

avec 0,01 < x < 0,4; 0,85 ≦ a < 1,15; a-y-z ≧ 0,4; z ≦ 0,5; où M= Mg, Ca, V, Nb, Cr, Mo, Mn, Cu, Zn, B, Al, C, Si, Sn, et en particulier Co.

La demande de brevet JP-A-86 176 065 concerne des alliages dérivant également de TiFe par substitution d'une part du Ti en particulier par du Ta ou Zr, d'autre part du Fe par exemple par Al ou Mn.

Des alliages dérivant de TiCr par substitution d'une part du Ti par exemple par La ou Zr, d'autre part du Cr en particulier par Al ou Mn, font l'objet de la demande de brevet JP-A-86 176 067.

Par ailleurs, la demande de brevet JP-A-86 288 373 est relative à des alliages dérivant du système TiCo par substitution de Al au Co.

Tous ces alliages à l'heure actuelle ne sont pas utilisés à cause de leur moindre résistance à la corrosion.

Des alliages dérivant du système TiNi ont été décrits dans la demande de brevet JP-A-86 288 372, obtenus par substitution partielle du Ni par Si, V, Mn, Zn, Nb, Mo, et en particulier Al. L'article paru dans le "Journal of the Less-Common Metals" (131 (1987) 311-319) mentionne également un alliage dérivé de TiNi par substitution partielle du Ti par Zr.

Une transformation austénitique/martensitique du système TiNi a lieu au voisinage de la température ambiante: l'absorption d'hydrogène risque donc d'être modifié de façon aléatoire par la coexistence de plusieurs phases cristallographiques. Il s'avère indispensable de stabiliser la structure de ce système pour pouvoir l'utiliser dans un accumulateur nickel-hydrure. L'article paru dans le "Journal of the Less-Common Metals" (131 (1987) 311-319) propose de stabiliser l'alliage en poudre par un dépôt de nickel ou de cuivre.

Dans le brevet US-3 824 131, les alliages dérivés du système TiNi sont constitués d'un mélange de deux phases TiNi et Ti₂Ni. Bien que ces matériaux présentent une capacité électrochimique initiale élevée et une bonne résistance à la corrosion dans la potasse, l'évolution de la structure cristalline, en particulier la formation d'une phase riche en titane, rend progressivement plus difficile la désorption d'hydrogène au cours des cycles de charge/décharge.

Pour éviter une dégradation des performances en cyclage, une famille d'alliages possédant une grande stabilité de sa structure cristalline au cours d'un cycle d'absorption/désorption d'hydrogène doit être recherchée.

Les besoins sans cesse croissants du marché imposent une augmentation de l'énergie volumique des accumulateurs; pour certaines applications, par exemple les outils portables, un accroissement de l'énergie massique est également nécessaire.

La présente invention a pour but d'augmenter la capacité volumique et massique de l'accumulateur nickel-hydrure, en proposant une classe d'alliages hydrurables, pour la réalisation de l'électrode négative, présentant une capacité et des propriétés physico-chimiques améliorées par rapport à celles des matériaux connus jusqu'à présent.

La présente invention a pour objet un matériau hydrurable pour électrode négative d'accumulateur nickel-hydrure dérivé du composé TiNi, caractérisé en ce qu'il est monophasé de formule générale: (Ti_{[1-(x+y)]} Zrₓ M_{y}) Ni_{z} avec: 0,05 ≦ (x+y) ≦ 0,5 , 0,05 ≦ y ≦ 0,15 , 0,9 ≦ z ≦ 1,2, où M est choisi parmi le vanadium V, le silicium Si, et une combinaison des deux.

Le matériau hydrurable est monophasé de réseau cubique centré avec un paramètre de maille de l'ordre de 3 Angströms; l'alliage obtenu a une structure austénitique cubique de type CsCl. Un alliage monophasé selon la présente invention présente des caractéristiques supérieures à celles des alliages connus en ce qui concerne la résistance à la corrosion et la capacité d'absoption. En effet d'une part l'existence d'une phase unique permet de supprimer les effets de pile locales qui se produisent en présence de plusieurs phases. Et d'autre part l'absorption de l'hydrogène s'effectue de manière homogène au sein de la phase unique, alors que toutes les phases ne sont pas également actives dans un alliage multiphasé et que la capacité de l'alliage diminue avec l'augmentation de la proportion des phases les moins actives.

Le vanadium et/ou le silicium substitués ont pour rôle de stabiliser la structure austénitique de l'alliage, afin d'éviter le passage à la structure martensitique comme cela se produit pour TiNi; le zirconium permet d'accroître les capacités électrochimiques et solide-gaz de l'alliage.

De préférence, x est compris entre 0,15 et 0,25, y est compris entre 0,05 et 0,15, le rapport atomique (Ti_{[1-(x+y)]} Zrₓ M_{y}) / Ni_{z} est compris entre 0,95 et 1,05, et M est le vanadium V. Selon un mode de réalisation, le matériau est de la forme:

(Ti_{0,7} Zr_{0,2} V_{0,1}) Ni

De préférence encore, x est compris entre 0,35 et 0,45, y est compris entre 0,05 et 0,15, le rapport atomique (Ti_{[1-(x+y)]} Zrₓ M_{y}) / Ni_{z} est compris entre 0,95 et 1,05, et M est Si. Selon un autre mode de réalisation, le matériau est de la forme:

(Ti_{0,5} Zr_{0,4} Si_{0,1}) Ni

On constate que la variation de volume après hydruration du matériau selon l'invention est inférieure à 15%.

La présente invention a également pour objet un procédé de réalisation de matériau hydrurable caractérisé en ce qu'il comprend la fusion des métaux constitutifs de l'alliage, et qu'ensuite l'alliage est refroidi jusqu'à 1150°C, puis maintenu à cette température durant 5 minutes, puis trempé.

La présente invention a également pour objet un procédé de mise en oeuvre dudit matériau hydrurable sous forme de poudre selon lequel la pulvérisation est réalisée par l'hydruration dudit matériau, en effectuant des cycles successifs d'absorption/désorption. La poudre peut ensuite être utilisée pour la réalisation d'une électrode négative d'accumulateur nickel-hydrure.

Enfin, la présente invention a pour objet une électrode négative d'accumulateur nickel-hydrure comportant un matériau hydrurable monophasé de formule générale: (Ti_{[1-(x+y)]} Zrₓ M_{y}) Ni_{z} avec: 0,05 ≦ (x+y) ≦ 0,5, 0,05 ≦ y ≦ 0,15 , 0,9 ≦ z ≦ 1,2 , où M est choisi parmi le vanadium V, le silicium Si, et une combinaison des deux.

Une telle électrode comprend un support conducteur (mousse de nickel ou feuillard d'acier nickelé et perforé) sur lequel est déposé un mélange de la poudre d'hydrure, d'une poudre conductrice, telle que du carbone, éventuellement platiné ou palladié, et d'un liant organique, tel qu'un polymère comme le PTFE.

D'autres caractéristiques et avantages de la présente invention apparaîtront au cours de la description suivante d'un mode de réalisation donné à titre illustratif mais nullement limitatif, et dans le dessin annexé:
- la figure 1 représente la courbe électrochimique de décharge à polarisation constante de l'alliage (Ti_{0,70} Zr_{0,22} V_{0,08}) Ni;
- la figure 2 représente le diffractogramme de rayons X du même alliage;
- la figure 3 représente la courbe de première hydrogénation sous 30 bars à 25°C du même alliage;
- la figure 4 représente de façon schématique une électrode négative d'accumulateur nickel-hydrure réalisée à partir du matériau hydrurable selon l'invention.

### EXEMPLE 1

Par exemple, pour la réalisation de l'alliage (Ti_{0,70} Zr_{0,22} V_{0,08}) Ni, le procédé d'élaboration comporte les étapes suivantes:
. un mélange est réalisé à partir des métaux constitutifs de grande pureté (3N à 5N) sous vide (10⁻⁶mbars);
. le lingot est homogénéisé par 5 fusions successives sous vide secondaire au four à induction dans un creuset de cuivre refroidi à l'eau; avant chaque nouvelle fusion, l'échantillon est retourné;
. après la dernière fusion, l'alliage est refroidi jusqu'à 1150°C, puis maintenu à cette température durant 5 minutes, puis trempé.

L'alliage ainsi obtenu est réduit en poudre par hydrogénations successives. Préalablement à la première absorption, l'échantillon est dégazé à 130°C pendant 12 heures. La pression d'hydrogène initiale, lors de la première absorption, est de 70 bars à 25°C. La capacité absorbée est de 1,9 atomes d'hydrogène/mole à une pression de 48 bars à 25°C. La désorption est réalisée en dégazant l'échantillon à 350°C pendant 3 heures sous vide primaire. Au total, 3 cycles d'absorption/désorption sont effectués.

La poudre est ensuite transférée en boîte à gants pour y être broyée sous argon afin d'obtenir une taille de grains inférieure à 36µm. Cette poudre est ensuite comprimée sous une pression de 10 tonnes/cm². La pastille obtenue est de forme cylindrique, de diamètre 9mm, d'épaisseur 1,2mm, et sa porosité est de 31%. Ensuite, cette pastille est frittée à 900°C pendant 4 heures au four à induction sous vide secondaire.

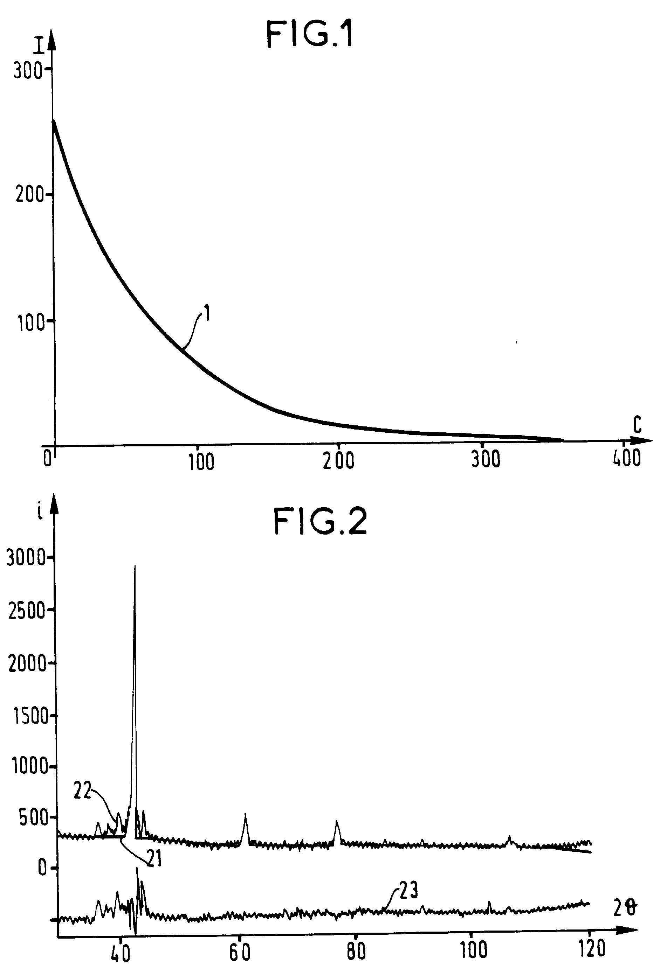

Cette pastille a servi à la réalisation d'une décharge à polarisation constante; le potentiel est fixé à -800mV par rapport à une électrode au mercure Hg/HgO oxyde mercurique, l'électrolyte est la potasse KOH 8,7N. La figure 1 montre la courbe 1 obtenue où C représente la capacité en mAh/g et I représente l'intensité en mA/g. La capacité maximale déchargée est de 350mAh/g, soit 50% de plus que TiNi.

### EXEMPLE 2

L'alliage (Ti_{0,70} Zr_{0,22} V_{0,08}) Ni réduit en poudre comme décrit dans l'exemple 1 a également servi à la réalisation du diffractogramme de rayons X de l'alliage, effectué à 20°C en utilisant la raie Kα du cuivre (λ=1,54178Å) et un monochromateur de graphite. La figure 2 montre la comparaison du spectre théorique 21, obtenu après affinement des raies par la méthode RIETVELD, et du spectre expérimental 22, représentée par la différence entre les 2 spectres 23; i est l'intensité des raies, et 2θ l'angle de diffraction. Le spectre a été indexé dans le système cubique centré de type CsCl (groupe d'espace Pm3m) avec un paramètre de maille de 3,043Å.

### EXEMPLE 3 Comparaison

Un alliage (Ti_{0,5} Zr_{0,3} V_{0,2}) Ni, ne faisant pas partie de l'invention, a également été étudié par micrographie optique et par microscopie des électrons rétrodiffusés. Cette étude a permis de constater que cet alliage est biphasé.

### EXEMPLE 4

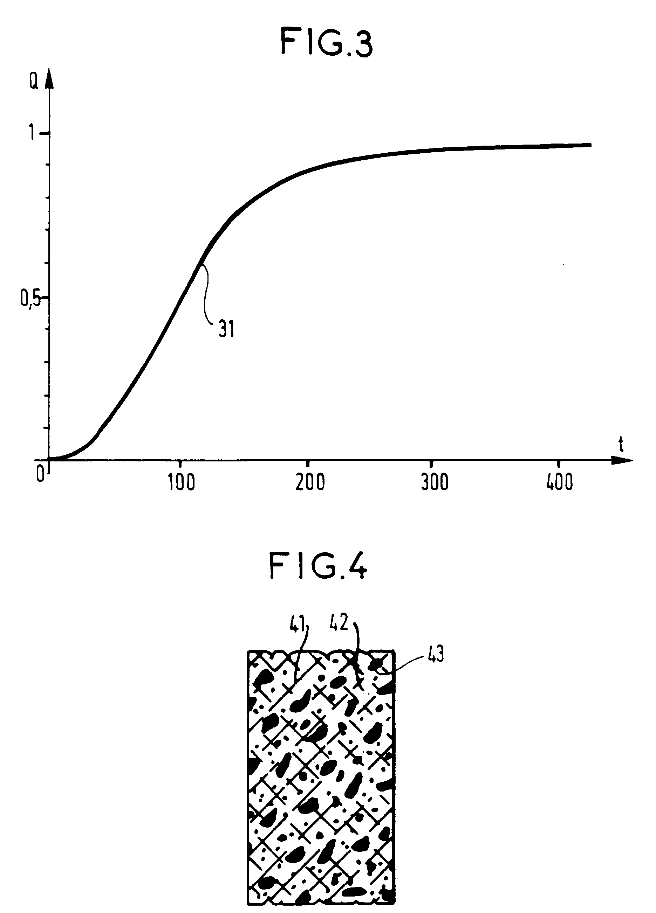

Une première hydrogénation solide-gaz de l'alliage (Ti_{0,70} Zr_{0,22} V_{0,08}) Ni réduit en poudre comme décrit dans l'exemple 1, est effectuée dans les conditions suivantes: après dégazage de 12 heures à 130°C, l'échantillon est soumis à une pression de 30 bars d'hydrogène à 25°C. La figure 3 montre la courbe d'hydrogénation 31 obtenue; t est le temps en minutes et Q est la capacité d'absorption en atome d'hydrogène/atome métallique.

Par ailleurs, après dégazage de 12 heures à 130°C, on impose à l'échantillon une pression de 60 bars d'hydrogène à 25°C. Après 3 cycles d'absorption-désorption, la vitesse de la réaction d'absorption est relativement élevée, 90% de la capacité totale est obtenue au bout de 4 minutes à 25°C.

La capacité maximale que l'on peut obtenir est de 0,95 atome d'hydrogène/atome métallique à 10 bars et 25°C, soit 35% de plus que le composé TiNi. La structure de l'hydrure est encore cubique de type CsCl avec un paramètre de maille de 3,15 Å. L'augmentation de volume est de l'ordre de 11%.

Ce matériau hydrurable est destiné à être utilisé pour la réalisation d'électrode négative d'accumulateur nickel-hydrure. Cette électrode, visible dans la figure 4, comporte un support 41 en feuillard d'acier perforé et nickelé; celui-ci peut être préalablement gauffré ce qui facilite l'enduction de matière au cours de la préparation de l'électrode. Ce support 41 est enduit d'une pâte 42 contenant un liant organique qui est du PTFE, une poudre conductrice qui est du carbone, et la poudre d'alliage hydrurable 43. L'ensemble est ensuite séché et comprimé pour obtenir une porosité finale de 20 à 40%. La composition massique de la pâte 42 après séchage est: 93% d'alliage hydrurable 43, 2% de PTFE, et 5% de carbone.

Cette électrode peut être utilisée dans tous les types d'accumulateurs nickel-hydrure, particulièrement les accumulateurs prismatiques étanches. Avantageusement, elle peut être employée pour des applications où il est nécessaire de pouvoir recharger l'accumulateur en moins d'une heure.

Bien entendu, la présente invention n'est pas limitée au mode de réalisation décrit, mais toute autre méthode conduisant au même matériau peut être envisagée. En particulier, les méthodes d'élaboration ou de mise en oeuvre relatives au matériau contenant du vanadium sont également applicables à celui contenant du silicium, ou une combinaison des deux. Des variantes de la méthode d'élaboration ou de mise en oeuvre sont également utilisables; en particulier, on peut réduire le matériau en poudre par toute autre technique classique de broyage.

## Revendications

1. Matériau hydrurable pour électrode négative d'accumulateur nickel-hydrure dérivé du composé TiNi, caractérisé en ce qu'il est monophasé de formule générale:
(Ti_{[1-(x+y)]} Zrₓ M_{y}) Ni_{z}
avec: 0,05 ≦ (x+y) ≦ 0,5,
0,05 ≦ y ≦ 0,15,
0,9 ≦ z ≦ 1,2;
où M est choisi parmi le vanadium V, le silicium Si, et une combinaison des deux.

2. Matériau hydrurable selon la revendication 1, caractérisé en ce qu'il est monophasé de réseau cubique centré avec un paramètre de maille de l'ordre de 3 Angströms.

3. Matériau hydrurable selon l'une des revendications 1 et 2, caractérisé en ce que x est compris entre 0,15 et 0,25, y est compris entre 0,05 et 0,15, le rapport atomique (Ti_{[1-(x+y)]} Zrₓ M_{y}) / Ni_{z} est compris entre 0,95 et 1,05, et M est le vanadium V.

4. Matériau hydrurable selon l'une des revendications 1 et 2, caractérisé en ce que x est compris entre 0,35 et 0,45, y est compris entre 0,05 et 0,15, le rapport atomique (Ti_{[1-(x+y)]} Zrₓ M_{y}) / Ni_{z} est compris entre 0,95 et 1,05, et M est le silicium Si.

5. Procédé de réalisation de matériau hydrurable selon l'une des revendications précédentes, caractérisé en ce qu'il comprend la fusion des métaux constitutifs de l'alliage, et qu'ensuite l'alliage est refroidi jusqu'à 1150°C, puis maintenu à cette température durant 5 minutes, puis trempé.

6. Procédé de mise en oeuvre du matériau hydrurable sous forme de poudre selon l'une des revendications 1 à 4, caractérisé par le fait que la pulvérisation est réalisée par l'hydruration dudit matériau.

7. Electrode négative d'accumulateur nickel-hydrure comportant un matériau hydrurable caractérisée par le fait que ledit matériau hydrurable est monophasé de formule générale:
(Ti_{[1-(x+y)]} Zrₓ M_{y}) Ni_{z}
avec: 0,05 ≦ (x+y) ≦ 0,5,
0,05 ≦ y ≦ 0,15,
0,9 ≦ z ≦ 1,2;
où M est choisi parmi le vanadium V, le silicium Si, et une combinaison des deux.

## Patentansprüche

1. Wasserstoff aufnehmendes Material für die negative Elektrode eines Nickel-Hydrid-Akkumulators, abgeleitet von der Zusammensetzung TiNi, dadurch gekennzeichnet, daß es einphasig ist und die allgemeine Formel (Ti_{[1-(x+y)]}ZrₓM_{y})Ni_{z} aufweist,
mit 0,05 ≤ (x+y) ≤ 0,5; 0,05 ≤ y ≤ 0,15; 0,9 ≤ z ≤ 1,2, wobei M aus Vanadium V, Silizium Si und einer Kombination der beiden ausgewählt wird.

2. Material nach Anspruch 1, dadurch gekennzeichnet, daß es einphasig ist und ein kubisches zentriertes Netz mit einem Maschenparameter von 3 Å hat.

3. Hydrierbares Material nach einem der Ansprüche 1 und 2, dadurch gekennzeichnet, daß x zwischen 0,15 und 0,25, sowie y zwischen 0,05 und 0,15 liegt, daß das Atomverhältnis (Ti_{[1-(x+y)]}ZrₓM_{y})/Ni_{z} zwischen 0,95 und 1,05 liegt und M Vanadium V ist.

4. Hydrierbares Material nach einem der Ansprüche 1 und 2, dadurch gekennzeichnet, daß x zwischen 0,35 und 0,45 sowie y zwischen 0,05 und 0,15 liegt, daß das Atomverhältnis (Ti_{[1-(x+y)]} ZrₓM_{y})/Ni_{z} zwischen 0,95 und 1,05 liegt und M Silizium Si ist.

5. Verfahren zur Herstellung eines Materials nach einem der vorhergehenden Ansprüche, dadurch gekennzeichnet, daß die die Legierung bildenden Materialien geschmolzen werden und daß danach die Legierung bis auf 1150°C abgekühlt, dann während 5 Minuten auf dieser Temperatur gehalten und dann abgeschreckt wird.

6. Verfahren zur Anwendung des pulverförmigen Materials nach einem der Ansprüche 1 bis 4, dadurch gekennzeichnet, daß die Pulverisierung durch Wasserstoffaufnahme des Materials erfolgt.

7. Negative Elektrode eines Nickelhydrid-Akkumulators, der ein hydrierbares Material enthält, dadurch gekennzeichnet, daß das hydrierbare Material einphasig und von der allgemeinen Formel (Ti_{[1-(x+y)]} ZrₓM_{y})Ni_{z} ist,
mit 0,05 ≤ (x+y) ≤ 0,5,
0,05 ≤ y ≤ 0,15,
0,9 ≤ z ≤ 1,2,
wobei M ausgewählt wird aus Vanadium V, Silizium Si und einer Kombination der beiden.

## Claims

1. A hydridable material for the negative electrode of a nickel-hydride storage cell, the material being derived from the compound TiNi, and being characterized in that it is a single-phase material and has the following general formula:
(Ti_{[1-(x+y)]}ZrₓM_{y})Ni_{z}
where:
0·5 ≤ (x+y) ≤ 0·5;
0·05 ≤ y ≤ 0·15; and
0·9 ≤ z ≤ 1·2;
where M is chosen from vanadium V, silicon Si, and a combination of vanadium and of silicon.

2. A hydridable material according to claim 1, characterized in that it is a single-phase material, and has a body-centered cubic lattice, with a lattice parameter of about 3 Å.

3. A hydridable material according to claim 1 or 2, characterized in that x lies in the range 0·15 to 0·25, y lies in the range 0·05 to 0·15, the atomic ratio (Ti_{[1-(x+y)]}ZrₓM_{y}) over Ni_{z} lies in the range 0·95 to 1·05, and M is vanadium V.

4. A hydridable material according to claim 1 or 2, characterized in that x lies in the range 0·35 to 0·45, y lies in the range 0·05 to 0·15, the atomic ratio (Ti_{[1-(x+y)]}ZrₓM_{y}) over Ni_{z} lies in the range 0·95 to 1·05, and M is silicon Si.

5. A method of making a hydridable material according to any preceding claim, characterized in that it comprises melting together the constituent metal of the alloy, then in cooling the alloy to 1,150°C, then in keeping the alloy at that temperature for 5 minutes, and then quenching it.

6. A method of implementing the hydridable material according to any one of claims 1 to 4 in powder form, characterized by the fact that the material is reduced to powder form by being hydrided.

7. A negative electrode for a nickel-hydride storage cell, the electrode including a hydridable material and being characterized by the fact that said hydridable material is a single-phase material and has the following general formula:
(Ti_{[1-(x+y)]}ZrₓM_{y})Ni_{z}
where:
0·5 ≤ (x+y) ≤ 0·5;
0·05 ≤ y ≤ 0·15; and
0·9 ≤ z ≤ 1·2;
where M is chosen from vanadium V, silicon Si, and a combination of vanadium and of silicon.
